# EUROPÄISCHE PATENTSCHRIFT

(11) **EP 2 066 927 B1**
(45) Veröffentlichungstag und Bekanntmachung des Hinweises auf die Patenterteilung: **09.01.2013**
(21) Anmeldenummer: 07803150.7
(22) Anmeldetag: 03.09.2007
(51) Int. Cl.: F16H 61/04

(54) **VERFAHREN ZUR AUFHEBUNG VON ZAHN-AUF-ZAHN-STELLUNGEN BEIM EINLEGEN VON GÄNGEN IN GETRIEBEN**
METHOD FOR OVERCOMING TOOTH BUTT CONDITIONS WHEN ENGAGING GEARS IN TRANSMISSIONS
PROCEDE DESTINE A SUPPRIMER LES POSITIONS DENT-SUR-DENT LORS DU PASSAGE DE VITESSES DANS UNE BOITE DE VITESSES

(30) Priorität: 30.09.2006 DE 102006046605
(43) Veröffentlichungstag der Anmeldung: 10.06.2009
(73) Patentinhaber: ZF Friedrichshafen AG, 88038 Friedrichshafen (DE)
(72) Erfinder: DÖBELE, Bernd, 88682 Salem (DE); WIENCEK, Norbert, 88709 Hagnau (DE)
(86) Internationale Anmeldenummer: PCT/EP2007/059163
(87) Internationale Veröffentlichungsnummer: WO 2008/037560

(56) Entgegenhaltungen:
- EP-A- 1 669 270
- WO-A-2006/032317
- US-A- 3 508 450
- US-A1- 2004 118 652

## Beschreibung

Die Erfindung betrifft ein Verfahren zur Aufhebung von Zahn-auf-Zahn-Stellungen beim Einlegen von Gängen in Getrieben gemäß dem Oberbegriff des Patentanspruchs 1, wie bekannt aus WO 2006/032 317.

Getriebe mit mehreren Gängen weisen zumindest eine Antriebswelle auf, die im Fall eines Kraftfahrzeugs üblicherweise von einer Verbrennungskraftmaschine angetrieben wird, die über eine oft als trockene Reibkupplung ausgeführte schaltbare Fahrkupplung mit der Antriebswelle des Getriebes verbunden ist. Eine Abtriebswelle des Getriebes steht über z. B. ein Differenzialgetriebe mit antreibbaren Rädern des Fahrzeugs in Verbindung. Da Verbrennungsmotoren nur in einem verhältnismäßig geringen Drehzahlbereich betrieben werden können, dient das Getriebe dazu, bei gegebener Fahrgeschwindigkeit des Fahrzeugs bzw. bei gegebener Abtriebswellendrehzahl des Getriebes die Antriebswellendrehzahl so einzustellen, dass der Verbrennungsmotor in einem möglichst günstigen Betriebspunkt arbeiten kann.

Abgesehen von bestimmten Sonderformen, wie z. B. stufenlos-variablen Getrieben, weist ein übliches Getriebe für Personenkraftwagen neben der Antriebswelle und der Abtriebswelle zumindest zwei, meistens jedoch 4 bis 7 feste Übersetzungsverhältnisse oder Gänge auf, wobei fast immer ein Rückwärtsgang mit Drehrichtungsumkehr vorgesehen ist. Bei Lastkraftwagen werden auch Getriebe mit erheblich mehr Gängen eingesetzt.

Die einzelnen Gänge werden dabei entweder geschaltet, indem bestimmte Zahnradpaare (oder auch äquivalente Übertragungsmittel wie Zahnriemenscheiben) in den Momentenfluss geschaltet werden, während andere Zahnradpaare an der Momentenübertragung nicht wirksam mitdrehen. Hierfür können bestimmte Zahnräder verschieblich aber drehfest auf Wellen angeordnet sein und beim Einlegen des zugeordneten Ganges so verschoben werden, dass sie mit einem anderen Zahnrad in Eingriff gelangen. Alternativ können die Zahnräder ständig mit ihren zugeordneten Zahnrädern kämmen, wobei die Drehmomentübertragung zwischen dem Zahnrad und der das Zahnrad tragenden Welle z.B. über eine schaltbare Klauenkupplung zwischen einem Freilauf und einer drehfesten Übertragung geschaltet werden kann.

In beiden Fällen kann es, insbesondere bei stehendem Fahrzeug und somit stehender Abtriebswelle dazu kommen, dass entweder die Stirnflächen zweier Zähne von in Eingriff zu bringenden Zahnrädern oder von Klauen einer zu schließenden Klauenkupplung mit ihren jeweils erhabenen Teilen aufeinander stehen, und der gewünschte Gang damit nicht geschaltet werden kann.

Um diese so genannte Zahn-auf-Zahn-Stellung aufzulösen ist es bekannt, die Stirnflächen der Zahnräder bzw. Klauen anzuschrägen, um so bei einer Zahn-auf-Zahn-Stellung aus der wirkenden axialen Kraft eine radiale, verdrehende Kraftkomponente zu gewinnen und zumindest ein Zahnrad bzw. eine Klaue so weiter zu drehen, dass die Zahnräder oder Klauen sauber einspuren. Dies ist jedoch mit einem erheblichen Fertigungsaufwand verbunden.

Weiter ist es bekannt, mit Hilfe unterschiedlicher Vorrichtungen und Verfahren eine Synchronisation der beteiligten Zahnräder oder Klauen so einzustellen, dass durch eine Differenzdrehzahl ein Einspuren gefördert wird. Allerdings sind der Wirksamkeit dieses Ansatzes ohne eine gleichzeitige Anschrägung der Stirnflächen schon deshalb Grenzen gesetzt, weil bei einem Kontakt der Stirnflächen durch deren Reibung ein entsprechendes Bremsmoment erzeugt wird, welches eine Zahn-auf-Zahn-Stellung wiederum begünstigt. Ein einwandfreies Schalten kann so zwar begünstigt, aber nur bedingt sichergestellt werden, sofern man die Schaltgeschwindigkeit nicht unerwünscht niedrig ansetzen will. Es wurden daher bereits verschiedene Vorschläge gemacht, wie eine auftretende Zahn-auf-Zahn-Stellung möglichst schnell wieder aufgelöst werden kann.

Hierfür ist eine relative Drehung der beteiligten Zahnräder oder der beteiligten Klauen notwendig. Neben sehr aufwendigen Lösungen mit eigenen Antrieben liegt es hier nahe, diese relative Rotation durch Drehung zumindest einer der Antriebs- oder Abtriebswellen bei eventuell gleichzeitig aufgehobenem oder zumindest verringertem Anpressdruck der beteiligten Zahnräder oder der beteiligten Klauen zu bewirken. Da dies auch bei stehendem Fahrzeug und damit stehender Abtriebswelle des Getriebes zuverlässig funktionieren soll und eine Abbremsung des Fahrzeugs zur Auflösung einer Zahn-auf-Zahn-Stellung nicht erwünscht ist, wird hierzu bevorzugt die Fahrkupplung so weit geschlossen, dass sich eine Verdrehung der Antriebswelle des Getriebes ergibt und gleichzeitig oder unmittelbar anschließend ein erneuter Schaltversuch unternommen.

Problematisch ist hierbei, dass das von der Fahrkupplung zu übertragende Drehmoment für die gewünschte positive oder negative Beschleunigung der Antriebswelle von einer Vielzahl von Parametern abhängig ist. Diese sind unter anderem die Fahrgeschwindigkeit des Fahrzeugs und die davon abhängige Drehzahl der Abtriebswelle des Getriebes, die Drehgeschwindigkeit der Motorabtriebswelle und der Betriebspunkt des Motors, der einzulegende Gang und nicht zuletzt die Viskosität des Getriebeöls, die wiederum von dessen Sorte, Alter und vor allem der Getriebeöltemperatur abhängig ist.

Um unter allen möglichen oder in der Praxis üblichen Bedingungen eine Zahn-auf-Zahn-Stellung im Getriebe auflösen zu können muss die Fahrkupplung daher nach gängiger Praxis so weit geschlossen werden, dass auch unter ungünstigen Bedingungen, die ein hohes Drehmoment an der Antriebswelle zur Auflösung der Zahn-auf-Zahn-Stellung erfordern, dieses Drehmoment zumindest erreicht wird. Dies hat jedoch zur Folge, dass bei weniger schwer aufzulösenden Zahn-auf-Zahn-Stellungen dennoch ein erhebliches Drehmoment anliegt und das Fahrzeug durch das nicht zur Auflösung benötigte Moment einen für die Insassen unangenehm hörbaren und oft sogar fühlbaren sowie für die auf einander prallenden Klauen oder Zähne stark belastenden Schlag erfährt.

Aus der US 6 769 523 B2 ist ein Verfahren bekannt, bei dem eine Kontrollvorrichtung eine Zahn-auf-Zahn-Stellung erkennt und daraufhin die Position der Fahrkupplung über die Zeit variiert, bis die Zahn-auf-Zahn-Stellung aufgelöst oder ein Abbruchkriterium erfüllt ist. Genauer gesagt werden verschiedene Versuche mit unterschiedlichen Fahrkupplungspositionen unternommen, wobei die Stellung der Fahrkupplung beginnend mit relativ kleinen Auslenkungen mit zeitlichen Unterbrechungen stärker in Richtung ihrer Geschlossen-Stellung ausgelenkt wird. Somit können leicht zu lösende Zahn-auf-Zahn-Stellungen mit geringen von der Fahrkupplung übertragenen Momenten gelöst und die vorstehend beschriebenen, unerwünschten Effekte weitgehend vermieden werden. In Weiterbildungen ist vorgesehen, bestimmte Parameter wie beispielsweise die Getriebeöltemperatur, zu erfassen und auszuwerten, um so gegebenenfalls schneller eine Fahrkupplungsposition einstellen zu können, welche zum Lösen der Zahn-auf-Zahn-Stellung geeignet ist. Obwohl dieses Verfahren im Vergleich zum zuvor geschilderten Verfahren zweifellos eine Verbesserung darstellt, kann diese bekannte technische Lösung dennoch nicht voll zufrieden stellen.

Dies liegt wesentlich daran, dass die Fahrkupplung für die Übertragung der maximalen Leistung des Antriebsmotors konzipiert ist, welches eine genaue Positionierung der Fahrkupplung für die Übertragung der gewünschten, vergleichsweise sehr kleinen Drehmomente zur Auflösung einer Zahn-auf-Zahn-Stellung sehr schwierig macht. Zudem ist die Fahrkupplung über ihre Gebrauchszeit einem erheblichen Verschleiß unterworfen, der bei der Positionierung ebenso zu berücksichtigen ist, wie sich kurzfristig ändernde Parameter wie etwa die Betriebstemperatur der Kupplung, die über Wärmedehnung eine im hier interessierenden Verstellbereich durchaus nennenswerte Veränderung des Kupplungsverhaltens bewirken kann.

Weiter kann das Verhältnis des Anpressdrucks der Reibelemente und des damit übertragbaren Drehmoments durch eine Änderung der Reibflächentemperatur, aber auch durch z.B. überhitzungsbedingte Verglasung, Verschmutzung der Reibflächen oder anderes verändert werden. Schließlich sind die Verstelleinrichtungen der Fahrkupplung notwendigerweise ebenfalls für den gesamten im Fahrbetrieb benötigten Verstellweg ausgelegt, womit für eine zielgenaue Verstellung im hier relevanten Bereich relativ geringer Momentenübertragung entweder eine aufwendige und damit teure sowie potenziell fehleranfällige Regelung der Kupplungsposition erforderlich ist, oder die Positioniergenauigkeit zumindest für den hier vorliegenden Zweck recht gering ist.

Zudem ist bei einer erkannten Zahn-auf-Zahn-Stellung zunächst die Fahrkupplung auf einen gewünschten Wert einzustellen und gleichzeitig die Drehzahl sowie das Drehmoment des Motors einzustellen und/oder bei der Ermittlung der Fahrkupplung-Sollposition zu berücksichtigen. Dies erfordert zwar nur eine kurze, aber gerade bei gegebenenfalls notwendigen mehrfachen Versuchen zur Auflösung der Zahn-auf-Zahn-Stellung dennoch für die Insassen deutlich merkbare und als unangenehm empfundene Zeitspanne.

Vor diesem Hintergrund liegt der Erfindung die Aufgabe zugrunde, ein Verfahren zur Aufhebung von Zahn-auf-Zahn-Stellungen beim Einlegen von Gängen in vorzugsweise unsynchronisierten Getrieben vorzustellen, mit dem Zahn-auf-Zahn-Stellungen mit geringem zusätzlichen baulichem Aufwand schnell und sicher aufgelöst werden können, wobei die benannten Nachteile des Standes der Technik vermieden oder zumindest minimiert werden sollen.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich Zahn-auf-Zahn-Stellungen durchweg erheblich schneller, schonender und sicherer auflösen lassen, wenn es gelingt, das in die Antriebswelle des Getriebe eingeleitete Drehmoment schneller und genauer als bisher einzustellen. Außerdem liegt der Erfindung die Erkenntnis zu Grunde, dass dies vorteilhaft dadurch erreichbar ist, dass die Fahrkupplung auf eine bestimmte Position eingestellt wird, die eine ausreichende Drehmomentübertragung an die Getriebeantriebswelle sicherstellt, während die Dosierung des tatsächlich für die Lösung der Zahn-auf-Zahn-Stellung wirksamen bzw. notwendigen Drehmomentes durch die Steuerung oder Regelung einer auf die Getriebeantriebswelle wirksamen Getriebebremse erfolgt.

Demnach geht die Erfindung aus von einem Verfahren zur Aufhebung von Zahn-auf-Zahn-Stellungen beim Einlegen von Gängen in Getrieben, wobei das Getriebe von einem Antriebsmotor über eine schaltbare, von einer Fahrkupplungssteuerung angesteuerte automatisch einstellbare Fahrkupplung angetrieben wird, und zumindest eine Antriebswelle, eine Abtriebswelle, wenigstens einen unter Verwendung formschlüssiger schaltbarer Elemente schaltbaren Gang sowie eine auf die Antriebswelle wirksame Getriebebremse aufweist.

Unter einem Getriebe wird im Folgenden ein Getriebe verstanden, welches den zumindest einen Gang durch das in Eingriff bringen von formschlüssigen Elementen schaltet. In erster Linie sind dies zahnradbasierte Getriebe mit diskreten Übersetzungsverhältnissen, die entweder durch eine Verschiebung eines drehfest angeordneten Zahnrades auf einer Welle und/oder durch die Verschiebung einer Schaltklaue auf einer Welle relativ zu einem ortsfest aber drehbar auf der Welle angeordneten Zahnrad schaltbar sind.

Grundsätzlich ist das Verfahren jedoch beispielsweise auch für Getriebe geeignet, bei denen an Stelle des durch eine Schaltklaue wahlweise drehbar oder drehfest auf einer Welle festgelegten Zahnrades z. B. eine kuppelbare Umschlingungsmittelscheibe vorgesehen ist. Kurz gesagt bezieht sich die Erfindung auf sämtliche Getriebe, bei denen es durch das auf einander treffen von hervorstehenden Teilen formschlüssiger Momentenübertragungsglieder zu einer Blockierung des Einlegens eines Zielganges kommen kann. Zur besseren Lesbarkeit werden diese Zustände hier und im Folgenden unter dem Begriff Zahn-auf-Zahn-Stellung zusammengefasst.

Schließlich geht die Erfindung von einer Erkennungsvorrichtung zur Erkennung von Zahn-auf-Zahn-Stellungen aus, die im einfachsten Fall aus einer Zeitüberwachung bestehen kann, welche bei einer Überschreitung einer Grenzzeitdauer zwischen dem Beginn des Schaltvorgangs und einer Rückmeldung über das erfolgreiche Einlegen des Ganges ein Signal ausgibt. Diese Erkennungsvorrichtung kann selbstverständlich an einer beliebigen Stelle und vorteilhaft als Teil einer ohnehin vorhandenen Einrichtung, etwa einer Getriebesteuerung vorgesehen sein. Die Grenzzeitdauer kann dabei im einfachsten Fall ein festgelegter und konstanter Wert sein.

Zur Lösung der gestellten Aufgabe ist vorgesehen, dass die Fahrkupplungssteuerung beim Erkennen eines bevorstehenden Gangeinlegens eine Einstellung der Fahrkupplung auf eine Betätigungsposition bewirkt, bei welcher ein vorgegebenes Drehmoment vom Antriebsmotor über die Fahrkupplung auf die Antriebswelle des Getriebes übertragen werden kann, welches gleich oder kleiner ist als ein momentanes oder einzustellendes Bremsmoment der Getriebebremse.

Auf diese Weise liegt an der Antriebswelle des Getriebes ein Drehmoment an, dass sich direkt oder indirekt an der auf die Antriebswelle des Getriebes wirksame Getriebebremse abstützt und somit zunächst in Bezug auf das weitere Getriebe nicht wirksam ist. Dies geschieht unabhängig davon, ob es tatsächlich beim Einlegen des Ganges zu einer Zahn-auf-Zahn-Stellung kommt oder nicht, und ermöglicht eine frühzeitige sowie entsprechend langsamer ausgeführte Einstellbewegung der Fahrkupplung.

Dies gestattet bei gleichem baulichen Aufwand eine genauere Positionierung der Fahrkupplung, wobei es zunächst unerheblich ist, ob hierfür ein Kupplungsweg, ein Aktuatorweg eines Fahrkupplungsaktuators oder eine Zielposition der Fahrkupplung oder des Aktuators, ein Druckwert eines Stellzylinders oder beispielsweise ein über einen Drehmomentsensor ermitteltes Fahrkupplungs-Abtriebsmoment als Stellgröße verwendet wird, wobei die letztgenannte Variante natürlich die genaueste ist und daher zumindest dann bevorzugt wird, wenn ein entsprechender Drehmomentsensor ohnehin im Fahrzeugantriebsstrang vorhanden ist.

Sofern es im weiteren Verlauf des Gangeinlegens zu keiner Zahn-auf-Zahn-Stellung kommt, wird durch das bis hier beschriebene Verfahren zwar ein gewisses Bremsmoment am Antriebsmotor erzeugt und die Fahrkupplung sowie die Getriebebremse etwas höher als beim Stand der Technik belastet. Es handelt sich hierbei jedoch im Vergleich zu den üblichen, dem Antriebsmotor abgeforderten Leistungen und den bei z. B. einem üblichen Anfahrvorgang auftretenden Belastungen der Fahrkupplung um vernachlässigbar kleine Werte Die Belastungszustände dauern zudem insbesondere in denjenigen Fällen, in denen es nicht zu einer Zahn-auf-Zahn-Stellung kommt, nur sehr kurz an, sodass sowohl der Mehrverbrauch des Antriebsmotors an Energie als auch die Belastung der Fahrkupplung in Form von Temperaturerhöhung und Verschleiß allenfalls unter Laborbedingungen messbar sein dürfte und in der Praxis vernachlässigbar ist.

Durch das erfindungsgemäße Verfahren liegt für den Fall, dass es zu einer Zahn-auf-Zahn-Stellung kommt, ein definiertes Drehmoment an der Antriebswelle des Getriebes an, welches einfach, schnell und vergleichsweise genau durch eine Reduzierung der Bremswirkung der Getriebebremse wirksam gemacht und in Größe und zeitlichem Verlauf moduliert werden kann.

Der Hauptvorteil hierbei ist, dass die Getriebebremse gewöhnlich um zumindest eine Größenordnung schwächer dimensioniert ist als die Fahrkupplung, womit diese bei ähnlichem baulichen Aufwand im hier interessierenden Lastbereich sehr viel genauer und aufgrund der erheblich geringeren trägen Massen auch schneller auf den jeweils gewünschten Wert eingestellt werden kann. Bei Automatgetrieben ist zudem meistens ohnehin eine auf die Antriebswelle direkt oder indirekt wirksame Getriebebremse samt zugehöriger Ansteuerung vorhanden, wodurch in vielen Fällen der zusätzliche bauliche Aufwand für die Implementierung des hier vorgestellten Verfahrens gegen Null geht, und das Verfahren über eine reine zusätzliche Softwaresteuerung in ohnehin vorhandenen Steuergeräten implementiert werden kann.

In der Erfindung ist vorgesehen, dass die Erkennungsvorrichtung beim Erkennen einer Zahn-auf-Zahn-Stellung Signale zur Einstellung der Getriebebremse erzeugt und ausgibt, die direkt oder indirekt eine Verringerung der Bremswirkung der Getriebebremse bewirken. Dabei ist es unerheblich, ob die Erkennungsvorrichtung diese Signale direkt in Form von Ansteuerungssignalen für die Aktuatoren der Getriebebremse ausgibt, oder beispielsweise lediglich ein Signal über das Fortbestehen der Zahn-auf-Zahn-Stellung an ein Getriebesteuergerät ausgibt, das die weiteren Berechnungen zur Ansteuerung der Getriebebremse übernimmt.

Eine andere Weiterbildung des Verfahrens sieht vor, dass die Fahrkupplungssteuerung beim Erkennen eines bevorstehenden Gangeinlegens eine direkte oder indirekte Einstellung des von der Fahrkupplung an die Antriebswelle des Getriebes übertragenen Drehmomentes bewirkt, welches gleich oder größer als ein ermitteltes oder ausgelesenes, maximal zur Auflösung der Zahn-auf-Zahn-Stellung benötigtes Moment ist.

Dies hat den Vorteil, dass auch unter ungünstigen Bedingungen das an der Antriebswelle des Getriebes anliegende Drehmoment mit hoher Wahrscheinlichkeit ausreicht, um die Zahn-auf-Zahn-Stellung zu lösen und eine relativ zeitaufwändige Nachjustierung der Position der Fahrkupplung für den Fall einer nur schwer zu lösenden Zahn-auf-Zahn-Stellung unterbleiben kann.

Andererseits ist es jedoch gemäß einer anderen Weiterbildung des Verfahrens wünschenswert, dass die Fahrkupplungssteuerung beim Erkennen eines bevorstehenden Gangeinlegens eine direkte oder indirekte Einstellung des von der Fahrkupplung an die Antriebswelle des Getriebes übertragenen Drehmomentes bewirkt, das gleich oder kleiner als ein ermitteltes oder ausgelesenes, maximal für die Auflösung der Zahn-auf-Zahn-Stellung erwünschtes Moment ist.

Dieses maximal erwünschte Drehmoment zum Lösen einer Zahn-auf-Zahn-Stellung ist in der Praxis hauptsächlich dadurch begrenzt, dass oberhalb eines gewissen, zum Lösen der Zahn-auf-Zahn-Stellung benötigten Drehmomentes mit einem erheblichen Schlag der einspurenden formschlüssigen Elemente gegeneinander zu rechnen ist, der einerseits die betreffenden oder auch weitere Bauteile schädigen kann und andererseits auch für die Insassen in Form eines Rucks, zumindest aber eines unerwünschten Geräusches wahrnehmbar ist.

Durch Kombination der oberen und der unteren Grenze für das von der Fahrkupplung an die Antriebswelle des Getriebes übertragene Drehmoment ergibt sich im günstigen Fall ein Drehmomentbereich für die Einstellung des durch die Fahrkupplung zu übertragenden Drehmoments, der durchaus in Abhängigkeit von z. B. der Getriebeöltemperatur und dem jeweiligen Zielgang ermittelt werden kann. In den meisten Fällen dürfte jedoch schon eine Wahl eines festen Wertes innerhalb der vorstehend beschriebenen Bandbreite genügen.

In ungünstigen Fällen, bei denen das maximal erwünschte Drehmoment zum Lösen einer Zahn-auf-Zahn-Stellung geringer ist als das unter ungünstigen Bedingungen erforderliche Drehmoment, ist es sinnvoll, das maximale Drehmoment auf das maximal erwünschte Drehmoment zu begrenzen, und für den Fall, dass dieses im Ausnahmefall nicht ausreichen sollte um die Zahn-auf-Zahn-Stellung zu lösen, alternative Problemlösungen, wie etwa das zwischenzeitliche Schalten in einen anderen Gang vorzusehen.

Für die Steuerung oder Regelung des Lösens bzw. Öffnens der Getriebebremse ist es von Vorteil, wenn die Erkennungsvorrichtung beim Erkennen einer Zahn-auf-Zahn-Stellung Signale zur Einstellung der Getriebebremse erzeugt und ausgibt, die direkt oder indirekt eine Verringerung der Bremswirkung der Getriebebremse in der Art bewirken, dass die Bremswirkung zunächst für eine vorbestimmte erste Zeitdauer um einen ersten Betrag verringert wird und für den Fall, dass die Erkennungsvorrichtung ein Weiterbestehen der Zahn-auf-Zahn-Stellung erkennt, die Bremswirkung mit zunehmender Zeit weiter geöffnet wird.

Dabei kann der erste Betrag beispielsweise so gewählt werden, dass einerseits ein erheblicher Anteil der im Betrieb vorkommenden Zahn-auf-Zahn-Stellungen gelöst werden kann, und dass andererseits auf die formschlüssigen Teile mit Zahn-auf-Zahn-Stellung ein so geringes Drehmoment ausgeübt wird, dass bei einer Aufhebung der Zahn-auf-Zahn-Stellung dieses für den Fahrer oder die Insassen des Fahrzeug nicht oder kaum merkbar ist. Hierbei können je nach Auslegung des Fahrzeugs für beispielsweise straff gefederte, hoch motorisierte und eher für eine sportliche Fahrweise konzipierte Fahrzeuge erheblich höhere Werte für das Lösen der Getriebebremse vorgesehen werden, als für Fahrzeuge, die eher für einen ökonomischen Betrieb und eine komfortable Fahrweise konzipiert sind.

Wenn die Erkennungsvorrichtung die Getriebebremse dabei mit zunehmender Zeit mit konstanten Zuwachsraten löst hat dies den Vorteil, dass bei häufiger vorkommenden, weniger schwer zu lösenden Zahn-auf-Zahn-Stellung ein jeweils relativ genau auf die jeweilige Situation abgestimmtes Öffnen der Getriebebremse erfolgen kann, während bei seltener vorkommenden, schwerer zu lösenden Zahn-auf-Zahn-Stellungen dennoch relativ schnell ein ausreichender Wert für das Öffnen der Getriebebremse erreicht wird.

Andererseits kann es in bestimmten Fällen auch sinnvoll sein, wenn die Erkennungsvorrichtung die Getriebebremse mit zunehmender Zeitdauer mit sinkenden Zuwachsraten öffnet. Auf diese Weise können die Mehrzahl der Zahn-auf-Zahn-Stellungen aufgrund der anfänglich hohen Zuwachsraten bei der Öffnung der Getriebebremse relativ schnell gelöst werden, während bei nur sehr schwer zu lösenden Zahn-auf-Zahn-Stellungen die weitere Verringerung der Bremswirkung der Getriebebremse langsamer erfolgt, welches insbesondere in Hinblick auf für die Insassen wahrnehmbare Effekte wie Geräusche und Erschütterungen sowie die Belastung von Bauteilen günstig ist.

Weiter ist eine Kombination der beiden vorstehend genannten Ausprägungen ebenfalls möglich und oft besonders günstig: Zunächst wird ein Stellwegbetrag zum Öffnen der Getriebebremse gewählt, der bereits einen erheblichen Anteil der vorkommenden Zahn-auf-Zahn-Stellungen zu lösen vermag, ohne dass dies für den Fahrer spürbar wäre oder eine nennenswerte Belastung der beteiligten Bauteile darstellt. Anschließend wird der Stellwegbetrag des Öffnens der Getriebebremse mit einer relativ hohen und/oder steigenden Zuwachsrate vergrößert, so lange dies nicht für den Fahrer oder für die Insassen zu als unangenehm empfundenen Symptomen führt. Auf diese Wiese kann auch ein Großteil der noch nicht gelösten Zahn-auf-Zahn-Stellungen gelöst werden.

Sollte die Zahn-auf-Zahn-Stellung jedoch weiter bestehen, so wird der Betrag, um den die Getriebebremse weiter geöffnet wird, nur noch mit geringen und/oder sich verringernden Zuwachsraten vergrößert, da dies derjenige Bereich ist, der sowohl für die Insassen deutlich wahrnehmbare Symptome des Lösens in Form von Erschütterungen und Geräuschen aufweist, als auch eine zum Teil erhebliche Belastung für die beteiligten Bauteile bedeuten kann. Hierbei wird der Minimierung der Belastung daher Vorrang vor der Geschwindigkeit der Auflösung der Zahn-auf-Zahn-Stellung eingeräumt.

Gemäß einer anderen Weiterbildung des Verfahrens ist vorgesehen, dass die Erkennungsvorrichtung bei Erkennen einer Zahn-auf-Zahn-Stellung Signale zur Einstellung der Getriebebremse erzeugt und ausgibt, welche ein intermittierendes Öffnen und Schließen der Getriebebremse zur Folge haben. Durch die an- und abschwellende Bremswirkung der Getriebebremse können bestehende Zahn-auf-Zahn-Stellungen oft bei einem geringeren anliegenden Drehmoment gelöst werden, als dies bei einer langsamen und kontinuierlichen Öffnung der Getriebebremse der Fall wäre. Selbstverständlich ist es besonders vorteilhaft, diese Weiterbildung mit den vorstehend beschriebenen Varianten zu kombinieren.

Wenn die Erkennungsvorrichtung den Stellwegbetrag und/oder den zeitliche Verlauf des Öffnens der Getriebebremse in Abhängigkeit von einem Fahrerwunsch modifizieren kann, ermöglicht dies eine genaue Abstimmung auf die individuellen Wünsche des Fahrers. Dies kann beispielsweise dadurch erreicht werden, dass diese Werte durch die Betätigung eines gegebenenfalls ohnehin vorhandenen Umschalters für eine sportlichere bzw. komfortablere Fahrweise automatisch geändert oder im Rahmen einer Programmierung eines Steuergerätes durch den Fahrer oder in einer Werkstatt einstellbar gestaltet werden.

Ebenso ist es vorteilhaft, wenn die Erkennungsvorrichtung bei der Einstellung der Getriebebremse den einzulegenden Gang und/oder die Getriebetemperatur und/oder Getriebeöltemperatur berücksichtigt. So kann der anfängliche Stellwegbetrag, um den die Getriebebremse geöffnet wird, etwa bei einer geringen gemessenen, auf andere Weise ermittelten oder auch abgeschätzten Getriebeöltemperatur vergrößert und bei einer hohen Getriebeöltemperatur verringert werden. Sofern sich herausstellt, dass Zahn-auf-Zahn-Stellungen bei bestimmten Zielgängen im Mittel schwerer aufzulösen sind als bei anderen Zielgängen, so kann dies ebenfalls entsprechend berücksichtigt werden.

Eine andere Weiterbildung des Verfahrens gemäß der Erfindung betrifft das Verhalten der Fahrkupplung nach der Auflösung einer Zahn-auf-Zahn-Stellung, oder für den Fall, dass es nicht zu einer Zahn-auf-Zahn-Stellung gekommen ist. Wenn die Erkennungsvorrichtung bei Erkennen eines problemlosen Einspurens der zu koppelnden Getriebekörper des Zielganges ein Signal ausgibt, welches die Kupplungssteuerung veranlasst die Fahrkupplung auf einen voreingestellten Wert zu öffnen, so fällt die durch das Verfahren bedingte geringe aber doch zusätzliche Belastung für den Antriebsmotor und die Fahrkupplung schnellstmöglich weg.

Natürlich ist es sinnvoll, gleichzeitig auch die Bremswirkung der Getriebebremse entsprechend zu reduzieren, um kein resultierendes Bremsmoment an den angetriebenen Rädern des Fahrzeugs wirksam werden zu lassen. In Anbetracht der relativ geringen Bremsleitungen der Getriebebremse genügt hier jedoch zumeist eine relativ einfache Steuerung zur Rücknahme der Bremswirkung der Getriebebremse.

Andererseits ist es ebenfalls von Vorteil, wenn die Erkennungsvorrichtung beim Erkennen eines Einspurens der zu koppelnden Getriebebauteile des Zielganges ein Signal ausgibt, welches eine weitgehende Kompensation des von der Fahrkupplung eingeleiteten Momentes durch eine Bremswirkung der Getriebebremse zur Folge hat. Optimalerweise wird also die Fahrkupplung nach dem Einlegen des Ganges geöffnet und für diejenige Zeitspanne, die dieses Öffnen der Fahrkupplung erfordert, die erheblich schneller ansteuerbare Getriebebremse zur sofortigen Kompensation des noch anliegenden Momentes angesteuert. Sobald die Fahrkupplung kein nennenswertes Drehmoment mehr an das Getriebe überträgt, wird auch die Getriebebremse wieder geöffnet.

Dadurch wird zwar eventuell bei einem Schaltvorgang bei fahrendem Fahrzeug kurzzeitig eine gewisse, in der Praxis jedoch nicht oder jedenfalls kaum wahrnehmbare Bremswirkung auf das Fahrzeug ausgeübt, dafür aber sicher vermieden, dass bei einem Schaltvorgang aus dem Stillstand heraus das über die Fahrkupplung eingeleitete Antriebsmoment größer ist als das von der Getriebebremse aufgenommene Bremsmoment und das Fahrzeug möglicher Weise ungewollt losrollt bzw. schneller losrollt, als dies vom Fahrer gewünscht ist. Selbstverständlich ist es hier auch möglich, noch weitere Parameter, wie etwa den Zielgang oder die Fahrgeschwindigkeit des Fahrzeugs, mit einzubeziehen, um das Gesamtverhalten weiter zu optimieren.

Die Erfindung lässt sich anhand eines Ausführungsbeispiels weiter erläutern. Dazu ist der Beschreibung eine Zeichnung mit zwei Figuren beigefügt. In dieser zeigt
- Fig. 1: den zeitlichen Verlauf der Stellung der Fahrkupplung, der Getriebebremse und weiterer Parameter bei einem Gangeinlegen bei rollendem Fahrzeug und
- Fig. 2: den zeitlichen Verlauf der Stellung der Fahrkupplung, der Getriebebremse und weiterer Parameter bei einem Gangeinlegen bei stehendem Fahrzeug.

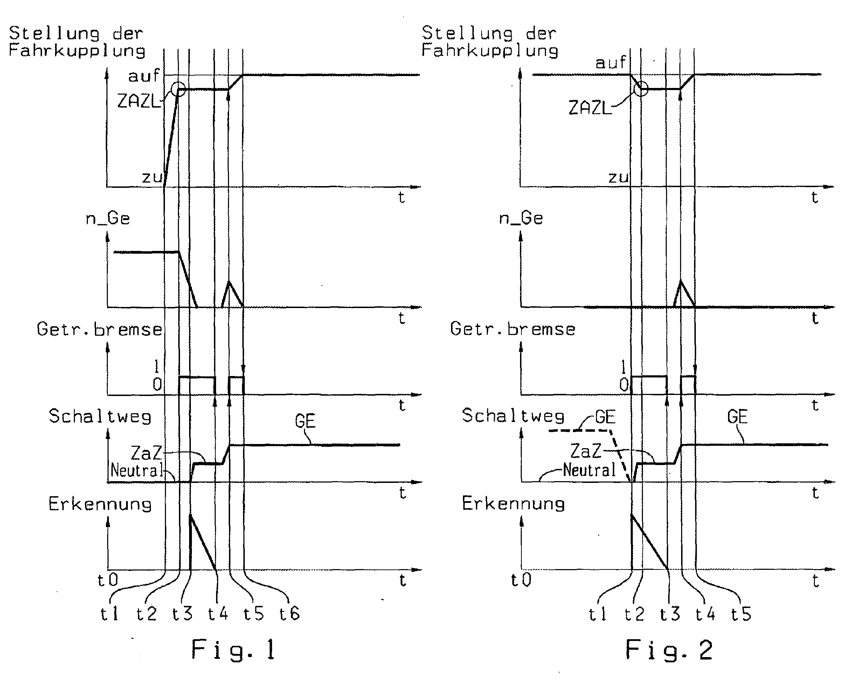

Das Verfahren gemäß der Erfindung ist in einem Kraftfahrzeug mit einem Antriebsstrang anwendbar, wie er aus den Fig. 1 und 2 der eingangs diskutierten US 6,769,523 B2 weitgehend bekannt ist. Dabei ist ein Antriebsmotor des Fahrzeugs über eine Fahrkupplung mit einem Schaltgetriebe verbunden. Zusätzlich ist in dem Antriebsstrang eine Getriebebremse vorhanden, mit der zumindest die Eingangswelle des Getriebes abbremsbar ist. Die Steuerung der Betätigung der Fahrkupplung und der Getriebebremse sowie der für einen Gangwechsel notwendigen druckmittelbetätigbaren Getriebeaktuatoren und Koppelmittel wird von einem elektronischen Steuerungsgerät übernommen.

Dieses Steuerungsgerät dient auch als Erkennungsvorrichtung zur Erkennung von Zahn-auf-Zahn-Stellungen von Zahnrädern bzw. Zahnrädern mit zugeordneten Koppelmitteln im Getriebe, verfügt über diesbezügliche Auswerteprogramme und ist mit den dafür notwenigen Sensoren verbunden. Außerdem ist in diesem Steuerungsgerät ein Steuerungsprogramm zur Auflösung dieser Zahn-auf-Zahn-Stellungen abgespeichert, welches nach dem Verfahren gemäß der Erfindung arbeitet.

Fig. 1 zeigt den zeitlichen Verlauf der Stellung der Fahrkupplung, der Getriebebremse und weiterer Parameter bei einem Gangeinlegen bei rollendem Fahrzeug. Genauer gesagt ist auf einer ersten, in der Zeichnung obersten Achse die Stellung einer Fahrkupplung über der Zeit aufgetragen, auf einer darunter angeordneten, mit n_Ge gekennzeichneten Achse die Drehzahl der Getriebeantriebswelle über der Zeit, auf einer dritten Achse die Schaltstellung einer Getriebebremse, auf einer darunter angeordneten vierten Achse der Schaltweg der beteiligten Zahnräder bzw. Koppelmittel innerhalb des Getriebes und schließlich auf der untersten, mit dem Begriff "Erkennung" beschrifteten Achse der Zustand einer so genannten Erkennungsvorrichtung. Diese Erkennungsvorrichtung ist vorzugsweise ein Softwaremodul in dem genannten elektronischen Steuerungsgerät. Die Zeitachsen sind jeweils im gleichen Maßstab aufgetragen, so dass die besonders gekennzeichneten Zeitpunkte t0 bis t6 jeweils auf allen Achsen einer gleichen absoluten Zeit entsprechen.

Es sein angenommen, dass zum Zeitpunkt t0 in einem automatisierten, nicht synchronisierten Schaltgetriebe eines Personenkraftwagens mit automatisierter Fahrkupplung sowie einer Getriebebremse der zweite Gang eingelegt ist und das Fahrzeug sich mit einer Geschwindigkeit von 40 km/h vorwärts bewegt. Dabei ist die Fahrkupplung geschlossen. Die Drehzahl der Getriebeantriebswelle ergibt sich aus der Fahrgeschwindigkeit sowie dem Übersetzungsverhältnis des gewählten Gangs und entspricht zu diesem Zeitpunkt aufgrund der geschlossenen Fahrkupplung der Abtriebsdrehzahl des Antriebsmotors. Die Getriebebremse ist nicht betätigt und die Zahnräder des hier betrachteten dritten Fahrganges befinden sich in einer Neutralstellung, in der sie kein Drehmoment übertragen.

Zum Zeitpunkt t1 wird ein Gangwechsel in den dritten Gang eingeleitet. Dazu wird ab diesem Zeitpunkt die Fahrkupplung geöffnet, bis sie sich zum Zeitpunkt t2 in einer mit ZAZL bezeichneten erfindungsgemäßen Zahn-auf-Zahn-Lösestellung befindet. Die übrigen Parameter bleiben in der Zeitspanne zwischen t1 und t2 konstant, wobei natürlich in üblicher Weise eine Motorsteuerung die Einspritzmenge reduziert, um den Antriebsmotor auf eine gewünschte Drehzahl einzustellen.

Im Zeitpunkt t2 ist die Öffnung der Fahrkupplung auf die gewünschte Zahn-Auf-Zahn-Lösestellung ZAZL abgeschlossen und der Antriebsmotor überträgt über die fast geöffnete Fahrkupplung je nach Drehzahldifferenz zwischen der Antriebs- und der Abtriebsseite der Fahrkupplung ein geringes Drehmoment an die Antriebswelle des Getriebes. Gleichzeitig wird ab dem Zeitpunkt t2 die Getriebebremse eingeschaltet, wodurch die Drehzahl der Antriebswelle des Getriebes sinkt und weiter ein gewisses, geringes Drehmoment vom Antriebsmotor über die Fahrkupplung an die Antriebswelle des Getriebes übertragen wird, das sich an der Getriebebremse abstützt.

Zum Zeitpunkt t3 beginnt der eigentliche Schaltvorgang und die Erkennungseinrichtung überwacht, ob der Schaltvorgang innerhalb einem vorgegebenen Zeitraum erfolgreich abgeschlossen wird. Kurz darauf sollten sich die Zahnräder des Zielganges in Eingriff befinden und der Gangwechsel getriebeseitig damit weitgehend abgeschlossen sein.

In diesem Fall kommt es jedoch, wie aus dem Diagram in Fig. 1 für den Schaltweg ersichtlich ist, zu einer Zahn-auf-Zahn-Stellung ZaZ, welches durch die Erkennungsvorrichtung erkannt wird. Diese veranlasst nach einer gewissen Wartezeit zwischen t3 und t4 im Zeitpunkt t4 ein Lösen der Getriebebremse (Schaltstellung = 0), wodurch das von der Fahrkupplung bereitgestellte Moment sich nicht mehr an der Getriebebremse abstützen kann und in der Folge auf die Antriebswelle des Getriebes wirkt, wodurch durch Drehen der Getriebeeingangswelle die Zahn-auf-Zahn-Stellung nach kurzer Zeit aufgelöst werden kann. Dies ist einerseits an dem Graphen des Schaltweges und andererseits an der Beschleunigung der Antriebswelle des Getriebes zwischen den Zeitpunkten t4 und t5 ersichtlich. Die Drehzahl der Getriebeantriebswelle ist hierbei aus Gründen der prägnanten Darstellung übertrieben hoch dargestellt.

Sobald die Lösung der Zahn-auf-Zahn-Stellung ZaZ von der Erkennungseinrichtung oder der Getriebesteuerung im Zeitpunkt t5 erkannt ist, wird die Fahrkupplung auf einen zuvor festgelegten Wert geöffnet, bei dem im Wesentlichen keine Momentenübertragung über die Fahrkupplung mehr stattfindet. Gleichzeitig wird die Getriebebremse nochmals bis zum Zeitpunkt t6 aktiviert (Schaltstellung = 1), um zu verhindern, dass sich während der zur vollständigen Öffnung der Fahrkupplung benötigten Zeit das noch an der Getriebeantriebswelle anliegende Moment als Beschleunigung des Fahrzeugs bemerkbar macht.

Im Zeitpunkt t6 ist der Schaltvorgang getriebeseitig abgeschlossen (Gang eingelegt = GE), die Getriebeeingangswelle steht still (n_Ge = 0) und das Fahrzeug kann jederzeit durch Schließen der Fahrkupplung und entsprechend Ansteuerung des Antriebsmotors im gewählten neuen Gang betrieben werden.

In Fig. 2 sind mit Hilfe der gleichen aufgetragenen Parameter die Vorgänge beim Einlegen eines Ganges aus dem Stillstand des Fahrzeugs aufgetragen. Zum Zeitpunkt t0 und bis zum Zeitpunkt t1 ist die Fahrkupplung geöffnet. Die Antriebswelle des Getriebes steht, die Getriebebremse ist gelöst und die hier interessierenden Zahnräder bzw. Koppelmittel des ersten Ganges befinden sich in einer Neutralstellung, in der sie kein Drehmoment übertragen können. Dabei ist es allerdings möglich, dass etwa unmittelbar nach dem Stoppen des Fahrzeugs noch ein zuvor eingelegter Gang (GE) ausgelegt wird. Da es sich hierbei jedoch um andere Zahnräder handelt, ist dieser Vorgang hier gestrichelt dargestellt.

Zum Zeitpunkt t1 beginnt das Einlegen des ersten Ganges. Hierfür wird die Fahrkupplung in ihre Zahn-auf-Zahn-Lösestellung ZAZL gebracht und die Erkennungseinrichtung beginnt mit der Überwachung, ob der Zielgang innerhalb einer vorgegebenen Zeitspanne eingelegt wird. Gleichzeitig wird die Getriebebremse schließend betätigt, um das sich aufbauende, vom Antriebsmotor über die Fahrkupplung auf die Antriebswelle des Getriebes wirkende Drehmoment abzustützen. Zum Zeitpunkt t2 ist die Positionierung der Fahrkupplung abgeschlossen und die in Eingriff zu bringenden Zahnräder bzw. Koppelmittel befinden sich in einer Zahn-auf-Zahn-Stellung ZaZ.

Nachdem die Erkennungseinrichtung eine gewisse Zeit gewartet hat, ob sich die Zahn-auf-Zahn-Stellung ZaZ von alleine auflöst, wird zum Zeitpunkt t3 die Getriebebremse geöffnet, woraufhin sich die Antriebswelle des Getriebes aufgrund des anliegenden geringen Drehmomentes der Fahrkupplung zu drehen beginnt, welches kurz vor dem Zeitpunkt t4 zum Lösen der Zahn-auf-Zahn-Stellung ZaZ führt. Dies wird von der Erkennungseinrichtung erkannt, die daraufhin zum Zeitpunkt t4 ein Öffnen der Fahrkupplung veranlasst und gleichzeitig für die kurze Zeit bis zur vollständigen Öffnung der Fahrkupplung die Getriebebremse erneut einschaltet (Schaltstellung = 1), um die Antriebswelle des Getriebes wieder bis zum Stillstand abzubremsen. Sobald die Fahrkupplung vollständig geöffnet und die Antriebswelle des Getriebes bis zum Stillstand abgebremst ist (n_Ge = 0), wird die Getriebebremse wieder gelöst. Der erste Gang ist nun eingelegt (GE) und kann durch ein Schließen der Fahrkupplung sowie ein gleichzeitiges Ansteuern des Verbrennungsmotors jederzeit genutzt werden.

### Bezugszeichen

- GE: Gang eingelegt
- N_Ge: Drehzahl der Getriebeeingangswelle
- t: Zeit
- ZaZ: Zahn-auf-Zahn-Stellung
- ZAZL: Zahn-auf-Zahn-Lösestellung

## Patentansprüche

1. Verfahren zur Aufhebung von Zahn-auf-Zahn-Stellungen beim Einlegen von Gängen in Getrieben, wobei das Getriebe von einem Antriebsmotor über eine schaltbare, von einer Fahrkupplungssteuerung angesteuerte automatisch einstellbare Fahrkupplung angetrieben wird, und zumindest eine Antriebswelle, eine Abtriebswelle, einen unter Verwendung formschlüssiger schaltbarer Elemente schaltbaren Gang sowie eine auf die Antriebswelle wirksame Getriebebremse aufweist, und weiter eine Erkennungsvorrichtung zur Erkennung von Zahn-auf-Zahn-Stellungen vorgesehen ist, **dadurch gekennzeichnet, dass** die Fahrkupplungssteuerung beim Erkennen eines bevorstehenden Gangeinlegens eine Einstellung der Fahrkupplung auf eine Betätigungsposition bewirkt, bei welcher ein vorgegebenes Drehmoment vom Antriebsmotor über die Fahrkupplung auf die Antriebswelle des Getriebes übertragen werden kann, welches gleich oder kleiner ist als ein momentanes oder einzustellendes Bremsmoment der Getriebebremse und die Erkennungsvorrichtung beim Erkennen einer Zahn-auf-Zahn-Stellung Signale zur Einstellung der Getriebebremse erzeugt und ausgibt, die direkt oder indirekt eine Verringerung der Bremswirkung der Getriebebremse bewirken.

2. Verfahren nach Anspruch 1 oder 2, **dadurch gekennzeichnet, dass** die Fahrkupplungssteuerung bei Erkennen eines bevorstehenden Gangeinlegens eine direkte oder indirekte Einstellung des von der Fahrkupplung an die Antriebswelle des Getriebes übertragenen Drehmoments bewirkt, welches gleich oder größer als ein ermitteltes oder ausgelesenes, maximal zur Auflösung der Zahn-auf-Zahn-Stellung benötigtes Drehmoment ist.

3. Verfahren nach Anspruch 1, **dadurch gekennzeichnet, dass** die Fahrkupplungssteuerung bei Erkennen eines bevorstehenden Gangeinlegens eine direkte oder indirekte Einstellung des von der Fahrkupplung an die Antriebswelle des Getriebes übertragenen Drehmomentes bewirkt, welches gleich oder kleiner als ein ermitteltes oder ausgelesenes, maximal für die Auflösung der Zahn-auf-Zahn-Stellung erwünschtes Drehmoment ist.

4. Verfahren nach wenigstens einem der vorherigen Ansprüche, **dadurch gekennzeichnet, dass** die Erkennungsvorrichtung bei Erkennen einer Zahrl-auf-Zahn-Stellung Signale zur Einstellung der Getriebebremse erzeugt und ausgibt, die direkt oder indirekt eine Verringerung der Bremswirkung der Getriebebremse in der Art bewirken, dass die Bremswirkung zunächst für eine vorbestimmte erste Zeitdauer um einen ersten Betrag verringert wird, und für den Fall, dass die Erkennungsvorrichtung ein Weiterbestehen der Zahn-auf-Zahn-Stellung erkennt, die Bremswirkung mit zunehmender Zeit weiter verringert wird.

5. Verfahren nach Anspruch 4, **dadurch gekennzeichnet, dass** die Erkennungsvorrichtung die Getriebebremse mit zunehmender Zeit mit konstanten Zuwachsraten löst.

6. Verfahren nach Anspruch 4, **dadurch gekennzeichnet, dass** die Erkennungsvorrichtung die Getriebebremse mit zunehmender Zeit mit wachsenden Zuwachsraten löst.

7. Verfahren nach Anspruch 4, **dadurch gekennzeichnet, dass** die Erkennungsvorrichtung die Getriebebremse mit zunehmender Zeit mit sinkenden Zuwachsraten löst.

8. Verfahren nach wenigstens einem der Ansprüche 4 bis 7, **dadurch gekennzeichnet, dass** die Erkennungsvorrichtung bei Erkennen einer Zahn-auf-Zahn-Stellung Signale zur Einstellung der Getriebebremse erzeugt und ausgibt, welche ein intermittierendes Öffnen und Schließen der Getriebebremse zur Folge haben.

9. Verfahren nach wenigstens einem der vorherigen Ansprüche, **dadurch gekennzeichnet, dass** der Betrag und/oder der zeitliche Verlauf des Öffnens der Getriebebremse in Abhängigkeit von einem Fahrerwunsch modifiziert wird.

10. Verfahren nach wenigstens einem der vorherigen Ansprüche, **dadurch gekennzeichnet, dass** die Erkennungsvorrichtung bei der Betätigung der Getriebebremse den einzulegenden Gang und/oder die Getriebetemperatur und/oder Getriebeöltemperatur berücksichtigt.

11. Verfahren nach wenigstens einem der vorherigen Ansprüche, **dadurch gekennzeichnet, dass** die Erkennungsvorrichtung beim Erkennen des Beginns des Einspurens der zu koppelnden Getriebeteile eines Zielgangs ein Signal ausgibt, welches die Kupplungssteuerung veranlasst, die Fahrkupplung auf einen vorbestimmten Wert zu öffnen.

12. Verfahren nach wenigstens einem der vorherigen Ansprüche, **dadurch gekennzeichnet, dass** die Erkennungsvorrichtung beim Erkennen des Beginns des Einspurens der zu koppelnden Getriebeteile eines Zielgangs ein Signal ausgibt, welches eine weitgehende Kompensation des von der Fahrkupplung weitergeleiteten Drehmomentes durch eine Bremswirkung der Getriebebremse zur Folge hat.

## Claims

1. Method for overcoming tooth abutment conditions when engaging gears in transmissions, wherein the transmission is driven by a drive engine via a shiftable, automatically adjustable driving clutch that is actuated by a driving clutch control unit, and has at least a drive shaft, an output shaft, a gear which can be shifted using positive-locking shiftable elements and a transmission brake which acts on the drive shaft, and furthermore a detection device for detecting tooth abutment conditions is provided, **characterized in that** the driving clutch control unit in the case of detection of an impending gear engagement brings about an adjustment of the starting clutch to an activation position in which a predetermined torque can be transmitted from the drive engine via the starting clutch to the drive shaft of the transmission which is equal to or less than a current braking moment, or braking moment to be set, of the transmission brake, and the detection device, in the case of detection of a tooth abutment condition generates and issues signals for adjusting the transmission brake which directly or indirectly bring about a reduction in the braking action of the transmission brake.

2. Method according to Claim 1 or 2, **characterized in that** the driving clutch control unit, in the case of detection of an impending gear engagement, brings about a direct or indirect adjustment of the torque transmitted from the starting clutch to the drive shaft of the transmission which is equal to or greater than a determined or read torque maximally required for resolving the tooth abutment condition.

3. Method according to Claim 1, **characterized in that** the driving clutch control unit, in the case of detection of an impending gear engagement, brings about a direct or indirect adjustment of the torque transmitted from the starting clutch to the drive shaft of the transmission which is equal to or less than a determined or read torque maximally desired for resolving the tooth abutment condition.

4. Method according to at least one of the previous claims, **characterized in that** the detection device, in the case of detection of a tooth abutment condition, generates and issues signals for adjusting the transmission brake which directly or indirectly bring about a reduction in the braking action of the transmission brake in such a manner that the braking action is initially reduced for a predetermined first period of time by a first amount, and in the event that the detection device detects a continued existence of the tooth abutment condition, the braking action is further reduced with increasing time.

5. Method according to Claim 4, **characterized in that** the detection device releases the transmission brake with increasing time with constant growth rates.

6. Method according to Claim 4, **characterized in that** the detection device releases the transmission brake with increasing time with growing growth rates.

7. Method according to Claim 4, **characterized in that** the detection device releases the transmission brake with increasing time with falling growth rates.

8. Method according to at least one of Claims 4 to 7, **characterized in that** the detection device, in the case of detection of a tooth abutment condition, generates and issues signals for adjusting the transmission brake which result in an intermittent opening and closing of the transmission brake.

9. Method according to at least one of the previous claims, **characterized in that** the amount and/or the temporal profile of the opening of the transmission brake is modified as a function of a driver's wishes.

10. Method according to at least one of the previous claims, **characterized in that** the detection device, in the case of activation of the transmission brake, takes into account the gear to be engaged and/or the transmission temperature and/or transmission oil temperature.

11. Method according to at least one of the previous claims, **characterized in that** the detection device, in the case of detection of the start of the meshing of the transmission parts to be coupled of a target signal, issues a signal which causes the clutch control unit to open the driving clutch to a predetermined value.

12. Method according to at least one of the previous claims, **characterized in that** the detection device, in the case of detection of the start of the meshing of the transmission parts to be coupled of a target signal, issues a signal which results in a substantial compensation of the torque transmitted by the driving clutch by means of a braking action of the transmission brake.

## Revendications

1. Procédé destiné à supprimer les positions dents-sur-dents lors de l'enclenchement de vitesses dans des boîtes de vitesses, la boîte de vitesses étant entraînée par un moteur d'entraînement par le biais d'un embrayage commutable, ajustable de manière automatique et commandé par une commande d'embrayage, présentant une vitesse commutable au moyen d'éléments commutables à engagement positif ainsi qu'un frein de boîte de vitesses agissant sur l'arbre d'entraînement, et en outre un dispositif de détection étant prévu pour détecter des positions dents-sur-dents, **caractérisé en ce que** la commande d'embrayage, à la détection d'un enclenchement de vitesse imminent, provoque un ajustement de l'embrayage à une position d'actionnement à laquelle un couple prédéfini peut être transmis depuis le moteur d'entraînement par le biais de l'embrayage à l'arbre d'entraînement de la boîte de vitesses, lequel couple est inférieur ou égal à un couple de freinage instantané ou à ajuster du frein de boîte de vitesses, et le dispositif de détection, s'il détecte une position dents-sur-dents, génère et délivre des signaux pour l'ajustement du frein de boîte de vitesses, lesquels provoquent directement ou indirectement une réduction de l'effet de freinage du frein de boîte de vitesses.

2. Procédé selon la revendication 1 ou 2, **caractérisé en ce que** la commande d'embrayage, à la détection d'un enclenchement de vitesse imminent, provoque un ajustement direct ou indirect du couple transmis par l'embrayage à l'arbre d'entraînement de la boîte de vitesses, lequel est supérieur ou égal à un couple détecté ou sélectionné, nécessaire au maximum pour éliminer la position dents-sur-dents.

3. Procédé selon la revendication 1, **caractérisé en ce que** la commande d'embrayage, à la détection d'un enclenchement de vitesse imminent, provoque un ajustement direct ou indirect du couple transmis par l'embrayage à l'arbre d'entraînement de la boîte de vitesses, lequel est inférieur ou égal à un couple détecté ou sélectionné, souhaité au maximum pour éliminer la position dents-sur-dents.

4. Procédé selon au moins l'une quelconque des revendications précédentes, **caractérisé en ce que** le dispositif de détection, à la détection d'une position dents-sur-dents, génère et délivre des signaux pour l'ajustement du frein de boîte de vitesses, lesquels provoquent directement ou indirectement une réduction de l'effet de freinage du frein de boîte de vitesses, de telle sorte que l'effet de freinage soit d'abord réduit d'une première valeur pendant une première durée prédéterminée, et au cas où le dispositif de détection continue de détecter la présence de la position dents-sur-dents, de telle sorte que l'effet de freinage soit réduit davantage pendant une durée croissante.

5. Procédé selon la revendication 4, **caractérisé en ce que** le dispositif de détection relâche le frein de boîte de vitesses pendant une durée croissante avec des taux de croissance constants.

6. Procédé selon la revendication 4, **caractérisé en ce que** le dispositif de détection relâche le frein de boîte de vitesses pendant une durée croissante avec des taux de croissance croissants.

7. Procédé selon la revendication 4, **caractérisé en ce que** le dispositif de détection relâche le frein de boîte de vitesses pendant une durée croissante avec des taux de croissance décroissants.

8. Procédé selon au moins l'une quelconque des revendications 4 à 7, **caractérisé en ce que** le dispositif de détection, à la détection d'une position dents-sur-dents, génère et délivre des signaux pour l'ajustement du frein de boîte de vitesses, lesquels entraînent une ouverture et une fermeture intermittentes du frein de boîte de vitesses.

9. Procédé selon au moins l'une quelconque des revendications précédentes, **caractérisé en ce que** la valeur et/ou l'allure dans le temps de l'ouverture du frein de boîte de vitesses est modifiée en fonction d'un souhait du conducteur.

10. Procédé selon au moins l'une quelconque des revendications précédentes, **caractérisé en ce que** le dispositif de détection, lors de l'actionnement du frein de boîte de vitesses, tient compte de la vitesse à enclencher et/ou de la température de la boîte de vitesses et/ou de la température de l'huile de boîte de vitesses.

11. Procédé selon au moins l'une quelconque des revendications précédentes, **caractérisé en ce que** le dispositif de détection, à la détection du début de l'engagement des pièces de la boîte de vitesses à accoupler d'une vitesse cible, délivre un signal qui autorise la commande d'embrayage à ouvrir l'embrayage d'une valeur prédéterminée.

12. Procédé selon au moins l'une quelconque des revendications précédentes, **caractérisé en ce que** le dispositif de détection, à la détection du début de l'engagement des pièces de la boîte de vitesses à accoupler d'une vitesse cible, délivre un signal qui donne lieu à une compensation sensible du couple transmis par l'embrayage par un effet de freinage du frein de boîte de vitesses.
